# EUROPEAN PATENT SPECIFICATION

(11) **EP 1 367 469 B1**
(45) Date of publication and mention of the grant of the patent: **02.11.2005**
(21) Application number: 03252414.2
(22) Date of filing: 16.04.2003
(51) Int. Cl.: G05B 19/414

(54) **Controller for machine**
Steuerungsvorrichtung für eine Maschine
Dispositif de commande pour une machine

(30) Priority: 29.05.2002 JP 2002155886
(43) Date of publication of application: 03.12.2003
(73) Proprietor: FANUC LTD, Minamitsuru-gun, Yamanashi 401-0597 (JP)
(72) Inventor: Nagashima, Noritake, c/o Fanuc Manshonharimomi, Minamitsuru-gun, Yamanashi, 401-0511 (JP); Hasegawa, Satoshi, c/o Fanuc Manshonharimomi, Minamitsuru-gun, Yamanashi, 401-0511 (JP)
(74) Representative: Billington, Lawrence Emlyn

(56) References cited:
- US-A- 4 663 730
- US-A- 4 882 670
- US-A- 5 621 672

## Description

The present invention relates to a controller having a processor for numerical control processing and a processor for sequential processing for use in control of an industrial machine such as a machine tool.

In recent years, a numerical controller having a processor for numerical control processing and also a processor for sequential processing separately from the processor for the numerical control processing has been generally used for a high speed operation of a machine tool. In such a numerical controller, the two processors perform their respective processing separately to have an advantage of greatly enhancing processing speed of the numerical control processing and the sequential processing.

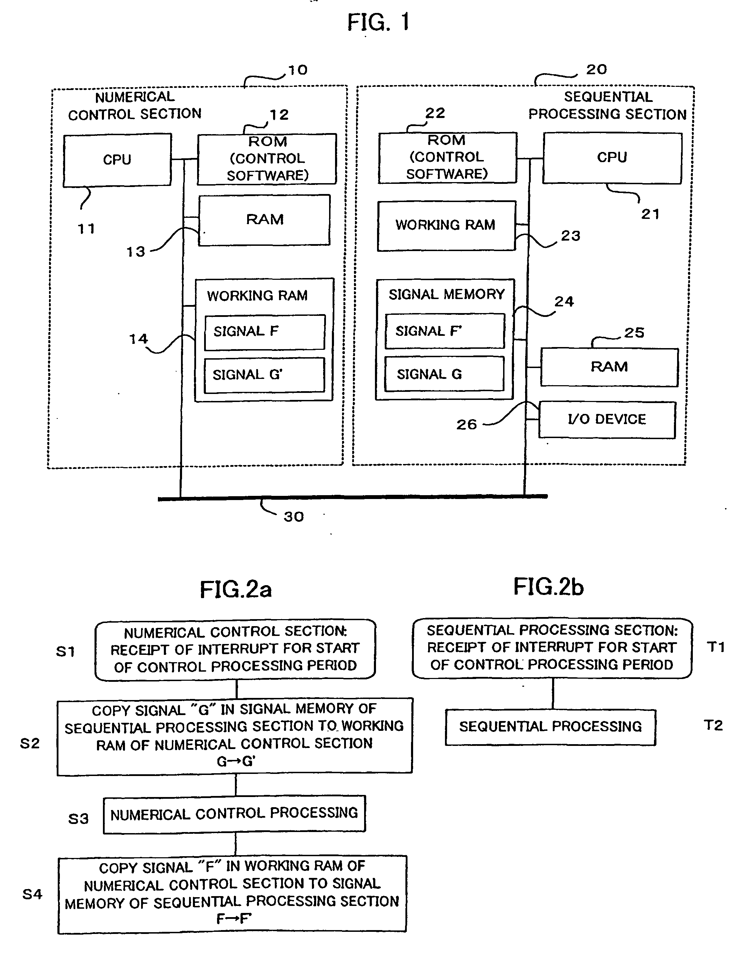

FIG. 1 is a block diagram of a conventional numerical controller having a processor for numerical control processing and a processor for sequential processing separately.

Referring to FIG. 1, a numerical control section 10 and a sequential processing section 20 are connected with each other by means of a bus 30. The numerical control section 10 comprises a processor 11 for numerical control processing, a ROM 12 storing a control software such as a system program, and a RAM 13 for storing the control software in execution thereof and having a nonvolatile area for storing machining programs and set values of various parameters, and a working RAM 14 for use in various arithmetic operations, which are connected by the bus 30. The working RAM 14 has a storage area for storing signals for use in the numerical control processing which are transferred between the numerical control section 10 and the sequential processing section 20.

The sequential processing section 20 comprises a processor 21 for sequential processing, a ROM 22 storing a control software for sequential control and sequence programs, a working RAM for storage of data in various arithmetic operations, a signal memory for use in transferring of signals to/from the numerical control section 10, a RAM 25 for storing the control software and sequence programs read from the ROM 22 for execution of the software and programs, and an I/O device 26 to be connected to an external input/output device, which are all connected through the bus 30.

A command signal F for the sequential processing section 20 is stored in the working RAM 14 of the numerical control section 10, and a signal G' is a copy of a command signal G from the sequential processing section 20 to the numerical control section 10. A signal F' stored in the signal memory 24 of the sequential control section 20 is a copy of the command signal F for the sequential processing section 20. The command signal G includes a notice of completion of the sequential processing.

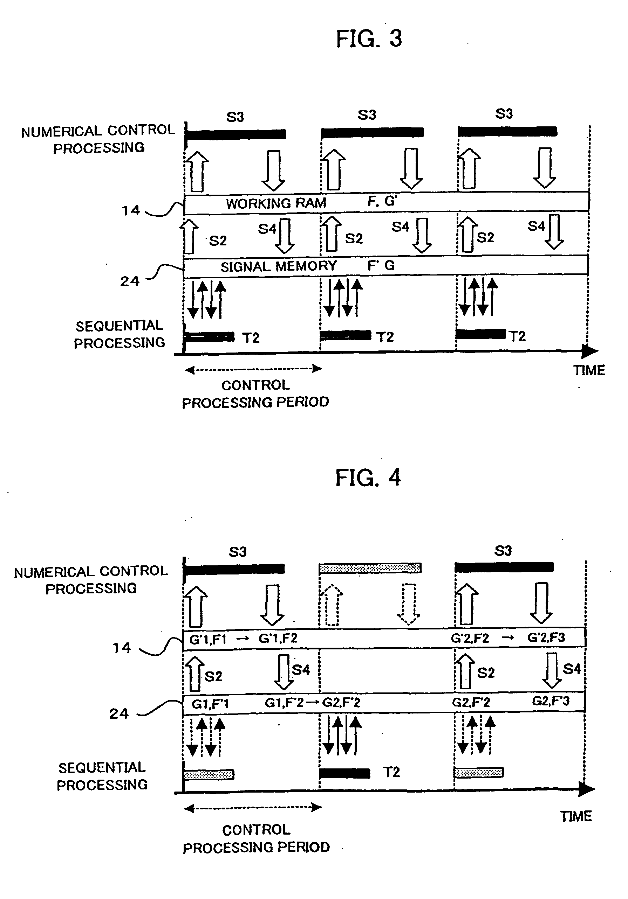

With the above described configuration of the numerical controller, the numerical control processing is performed by the numerical control processing processor 11 and the sequential processing including execution of the sequence program is performed by the sequential processing processor 21 separately at every control processing period. The processing performed by the numerical control processor 11 and the processing performed by the sequential processing processor 21 are shown in flowcharts of FIGS. 2a and 2b, and a timing chart of the processing performed by the processors 11 and 21 is shown in FIG. 3.

Referring to FIG. 2a and 3, in the numerical control section 10, numerical control is started when the numerical control processor 11 receives interruption of start of the control processing period (Step S1).

First, a copy of a command signal G stored in the signal memory 24 of the sequential processing section 20 is sent to the numerical control section 10 and stored as a signal G' in the working RAM 14 (Step S2). The numerical control processing is performed based on the machining program stored in the RAM 13 using a signal F and the signal G' stored in the working RAM 14 (Step S3). A copy of a command signal F obtained by the numerical control processing for the sequential processing section 20 is sent to the sequential processing section 20 and stored as a signal F' in the signal memory 14 (Step S4). The above processing from Step S1 to Step S4 is executed at every control processing period by the processor 11 of the numerical control section 10 as shown in FIG. 3. The reference symbols S2-S4 and T2 in FIG. 3 represent the processing of corresponding Steps in the flowchart of FIG. 2.

Referring to FIGS. 2b and 3, in the sequential processing section 20, when the sequential processing processor 21 receives an interruption of start of the control processing period (Step T1), the sequential processing is started (Step T2). In the sequential processing, an input signal from the external input/output device is read and stored in the signal memory 24, the sequential processing is performed based on the sequence program stored in the RAM 25 which is read from the ROM 22, using the signals F', G and other signals (Step T2). Particularly, the command signal F' from the numerical control section 10 stored in the signal memory 24 is read and judgment and processing on the signal are performed and a command signal G obtained by the sequential processing is written in the signal memory 24. The sequential processing includes processing for outputting a command stored in the signal memory 24 to the external input/output device through the I/O device 26 and processing for writing a signal inputted to the numerical control section 10 in the signal memory 24. Subsequently, the processing of Steps T1-T2 is performed at every control processing period.

In the numerical controlled machine tool, it is a common practice that the sequential processing section 20 performs the sequential processing using the command signal F (F') issued from the numerical control section 10 and a result of the sequential processing is outputted to the numerical control section 10 as the command signal G (G'), to control the machine tool. The faster the transfer of the signals from the numerical control section 10 to the sequential processing section 20 and vice versa is, the higher the control speed of the machine tool is.

However, in the numerical controller having the numerical control processor 11 and the sequential processing processor 21 separately, since the two processors operate simultaneously and parallelly with each other, there arises a problem that the command signal F from the numerical control section 10 to the sequential processing section 20, and the command signal G from the sequential processing section 20 to the numerical control section 20 are delayed in dependence of timing of issuance of the signals.

FIG. 4 shows a phenomenon of delay of the processing. A copy of a command signal G1 stored in the signal memory 24 of the sequential processing section 20 is sent to the working RAM 14 and stored as a signal G'1 (Step S2), and the numerical control processor 11 performs numerical control processing to create a command signal F2 for the sequential processing section 20 (Step S3). A copy of the resultant command signal F2 is sent to the sequential processing section 20 and stored in the signal memory 24 as a signal F'2 (Step S4). The sequential processing processor 21 processes the signal F'2 by the sequential program to obtain a command signal G2 for the numerical control section 10 as a result of the sequential processing (Step T2). The command signal G2 is transferred from the sequential processing section 20 to the numerical control section 10 and stored in the working RAM 14 as a signal G'2 (Step S2), and the numerical control processing is performed (Step S3).

Thus, at least two control processing periods are necessary for transferring of the signals from the numerical control section 10 to the sequential processing section 20 and then from the sequential processing section 20 to the numerical control section 10, to lower the processing speed.

US 5621672 discloses a control system for controlling the operations of a plurality of devices for positioning logical axes, wherein a multitask processor performs a parallel control of the respective devices and wherein some of the operations are controlled in real-time by a real-time processor.

US 4882670 discloses a numerical control system in which processing is dispersed to reduce the load on a numerical control processor. The system comprises a numerical control unit having a processor, a programmable machine controller for executing sequence control, a man-machine interface controller and a data exchange controller. The data exchange controller controls data exchange between the other elements.

US 4663750 discloses a sequence controller comprising a numerical control processor and a sequence control processor, wherein predetermined sequence processing can be executed by the sequence control processor in accordance with data transferred periodically from the numerical control processor together with an interrupt signal each time data transfer is completed.

An object of the present invention is to provide a numerical controller capable of performing high-speed processing.

A controller of the present invention controls a machine by executing numerical control processing by a first processor and sequential processing by a second processor, and the controller comprises: notifying means for notifying a starting time of the numerical control processing by the first processor to the second processor; and determining means for determining time to start the sequential processing by the second processor based on the starting time notified by the notifying means, wherein the determining means includes a delay-time parameter for designating a delay time and determines the time to start execution of the sequential processing by calculation on the basis of the starting time of the numerical control processing using the delay time designated by the delay-time parameter.

The first processor may execute the numerical control processing at every control processing period, and the determining means may determine the time to start the sequential processing within the same control processing period in which the execution of the numerical control processing is completed.

The notifying means may include interrupt generating means for generating an external interrupt from the first processor to the second processor so as to notify the starting time of the numerical control processing to the second processor. Alternatively, the notifying means may include a shared memory accessible by both of the first processor and the second processor, and the starting time of the numerical control processing notified by setting of a flag in the shared memory by the first processor and monitoring of the flag in the shared memory by the second processor.
FIG. 1 is a block diagram of a conventional numerical controller having a processor for numerical control processing and a processor for sequential processing;
FIGS. 2a and 2b are flowcharts of processing performed by the processor for numerical control processing and the processor for sequential processing, respectively, in the conventional numerical controller;
FIG. 3 is a timing chart of the processing in the conventional numerical controller;
FIG. 4 is a timing chart showing delay of the processing in the conventional numerical controller;
FIG. 5 is a block diagram of a numerical controller according to a first embodiment of the present invention;
FIGS. 6a and 6b are flowcharts of processing to be performed by the processor of the numerical control section and the processor of the sequential processing section, respectively of the numerical controller of the first embodiment;
FIG. 7 is a timing chart of the processing in the numerical controller of the first embodiment;
FIG. 8 is a block diagram of a numerical controller according to a second embodiment of the present invention;
FIGS. 9a and 9b are flowcharts of processing to be performed by the processor of the numerical control section and the processor of the sequential processing section, respectively of the numerical controller of the second embodiment;
FIG. 10 is a timing chart of the processing in the numerical controller of the second embodiment;
FIG. 11 is a block diagram of a different proposed numerical controller;
FIGS. 12a and 12b are flowcharts of processing to be performed by the processor of the numerical control section and the processor of the sequential processing section, respectively of the numerical controller of FIG. 11;
FIG. 13 is a timing chart of the processing in the numerical controller of FIG. 11;
FIG. 14 is a block diagram of another proposed numerical controller;
FIGS. 15a and 15b are flowcharts of processing to be performed by the processor of the numerical control section and the processor of the sequential processing section, respectively of the numerical controller of FIG. 14; and
FIG. 16 is a timing chart of the processing in the numerical controller of FIG. 14.

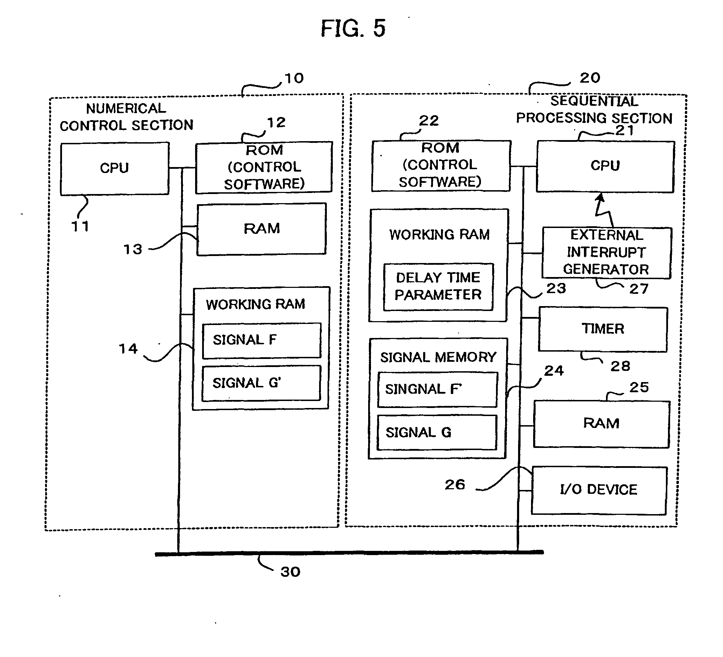

FIG. 5 schematically shows a hardware configuration of a numerical controller according to a first embodiment of the present invention. The numerical controller shown in FIG. 5 differs from the conventional numerical controller shown in FIG. 1 in that an external interrupt generator 27 is provided to be connected with the bus 30 in the sequential processing section 20 and that a delay time parameter for setting delay time is provided in the working RAM 23 of the sequential processing section 20. The same reference numeral is assigned to the elements having the same or equivalent function as those in the numerical controller shown in FIG. 1.

The numerical controller has a numerical control section 10 and a sequential control section 20 connected with each other by a bus 30. The numerical control section 10 comprises a processor 11 for numerical control processing, a ROM 12 storing a control software such as a system program, and a RAM 13 for use in storing the system program, etc. stored in the ROM 12 for execution of the stored program. The RAM 13 has a nonvolatile section for storing machining programs and set values of various parameters. The numerical control section 10 is provided with a working RAM 14 for use in various arithmetic operations and having a storage section for storing command signals F from the numerical control section 10 to the sequential processing section 20 and signals G' as copies of the command signals G form the sequential processing section 20 to the numerical control section 10.

The sequential processing section 20 comprises a processor 21 for sequential processing, a ROM 22 storing a control software for sequential control and sequence programs, a working RAM for use in various arithmetic operations, a signal memory for sending/receiving of signals to/from the numerical control section 10, a RAM 25 for storing the control software and sequence programs read from the ROM 22 for execution of these software and programs, an I/O device 26 to be connected to an external input/output device, and further an external interrupt generator 27 and a timer 28, which are all connected through the bus 30.

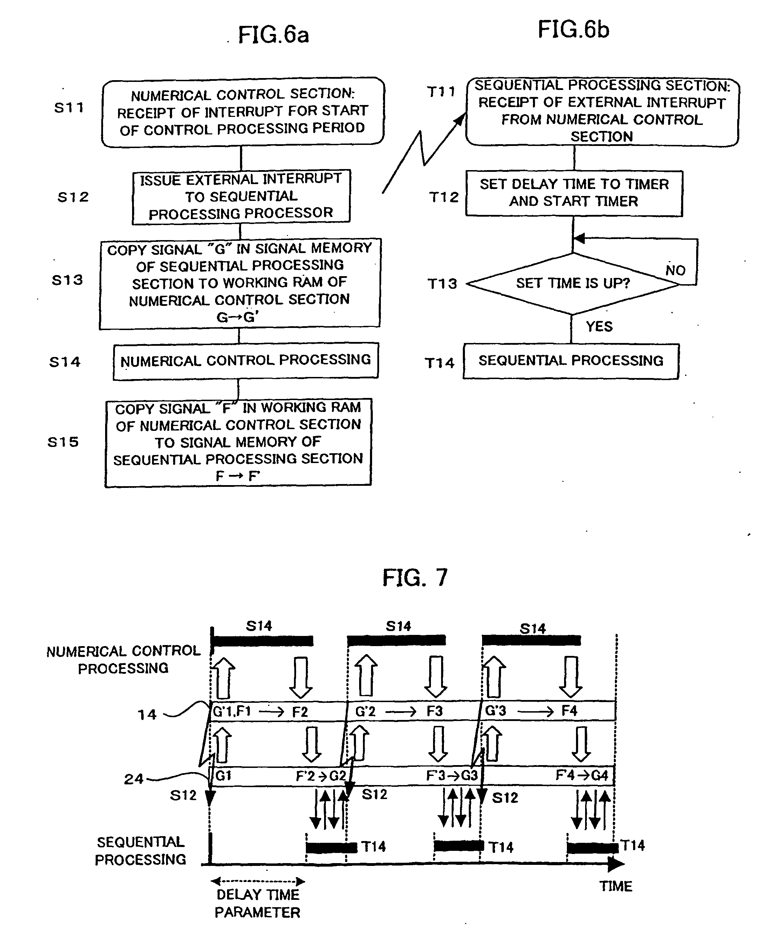

An operation of the numerical controller as shown in FIG. 5 will be described referring to flowcharts of FIGS. 6a and 6b, and a timing chart of FIG. 7. FIG. 6a shows processing to be performed by the processor 11 of the numerical control section 10 and FIG. 6b shows processing to be performed by the processor 22 of the sequential processing section 20.

A time period from a start to an end of one numerical control processing by the numerical control section 10 is set as the delay time parameter in the working RAM 23 of the sequential processing section 20 through an data input device (not shown) in advance of the following processing.

The processor 11 of the numerical control section 10 starts the numerical control processing upon receipt of an interruption for start of the control processing period (Step S11). First, the processor 11 writes an interrupt signal in a register in the external interrupt generator 27 of the sequential processing section 20 (Step S12). A copy of a command signal G for the numerical control section 10 stored in the signal memory 24 of the sequential processing section 20 is transferred to the numerical control section 10 and stored as a signal G' in the working RAM 14 (Step S13). The numerical processing is performed based on the machining program stored in the RAM 13 using the signals F and G' stored in the working RAM 14 to obtain a new command signal F for the sequential processing section 20 (Step S14).

Then, a copy of the command signal F as a result of the numerical control processing is transferred to the sequential processing section 20 and stored as a signal F' in the signal memory 14 (Step S 15) and the procedure of the processor 11 of the numerical control section 10 in one control processing period is terminated. The processing of Steps S11-S15 is repeatedly executed at every control processing period.

In the sequential processing section 20, the sequential processing processor 21 starts the sequential processing upon receipt of the external interrupt issued from the numerical control section 10 (Step T11). The time period stored in the working RAM 23 as the delay time parameter is set to the timer 28 and counting of the set time period is started (Step T12). The procedure waits until the timer 28 counts up the set time (Step T13), and when the timer 28 counts out the set time, an input/output signal from the external input/output device is read through the I/O device 26 and stored in the signal memory 24 , and the sequence program read from the ROM 22 and stored in the RAM 25 is executed using the signals F', G and the other signals stored in the signal memory 24 (Step T14). Specifically, the command signal F' stored in the signal memory 24, which has been transmitted from the numerical control section 10, is read and judgement and processing are performed on the signal F' to obtain a command signal G for the numerical control section 10, and the obtained signal G is written in the signal memory 24. A command for the external input/output device stored in the signal memory 24 is outputted to the external input/output device, and signals from the external input/output device are written in the signal memory 24. Subsequently, the above processing is repeatedly executed by the processor 21 of the sequential processing section 20 each time when an interrupt signal, which is issued from the numerical control section 10 at every control processing period, is received.

FIG. 7 shows an operational timing according to the first embodiment of the invention. The reference symbols of S12, S14, T12, etc. in FIG. 7 correspond to Steps in the flowcharts of FIGS. 6a and 6b.

In the example shown in FIG. 7, a signal F1 has been already stored in the working RAM 14 of the numerical control section 10, and a signal G1 has been already stored in the signal memory 24 of the sequential processing section 20. When the processor 11 of the numerical control section 10 starts the numerical control processing, an interrupt command is issued to the sequential processing section 20 (Step S 12). A copy of the command signal G1 stored in the signal memory 24 of the sequential processing section 20 is transferred to the numerical control section 10 and stored in the working RAM 14 as a signal G'1 (Step S13). The numerical processing is performed based on the machining program using the signals G'1 and F1 stored in the working RAM 14 (Step S14), and a copy F'2 of a command signal F2 as a result of the numerical control processing is transferred to the sequential processing section 20 and written in the working RAM 14. The signal F2 is copied in the signal memory 24 of the sequential processing section 20 as a signal F'2 (Step S15).

The processor 21 of the sequential processing 20 reads the signal stored in the signal memory 24 after receipt of the interrupt signal from the numerical control section 10 and when the set time period set as the delay time parameter elapsed, and the sequential processing is performed based on the sequence program using the read signal (Step T12). Since the time period set as the delay time parameter is set longer than the time period from the receipt of the interrupt signal from the numerical control section 10 to the time when the command signal F2 is copied in the command signal F2 of the sequential processing section 20, the sequential processing is performed based on the signal G1 and the signal F'2 as a copy of the command signal F2. A result of the sequential processing is written in the signal memory 24 of the numerical control section 10 as a command signal G2 (Step T14).

In the next control processing period, the processor 11 of the numerical control section 10 copies the command signal G2 from the sequential processing section 20 in the interrupt working RAM 14 as a signal G'2, and the numerical control is performed based on the signals F2 and G'2 stored in the working RAM 14 and the machining program (Step S14), to obtain a command signal F3 for the sequential processing section 20.

Subsequently, the numerical control processing and the sequential processing are performed at every control processing period, and the sequential processing is performed using the command (F) from the numerical control section 10 by the sequential processing section 20 and a command (G) for the numerical control section 10 is sent back to the numerical control section 10, to complete the whole processing within one control processing period, as shown in FIG. 7. Thus, the processing is performed twice as faster than the processing in the conventional numerical controller, as shown in FIGS. 1-4.

In the above embodiment, it is described that one sequential processing is completed within the control processing period in which the sequential processing is started. If the sequential processing is not completed within the same control processing, the command signal G obtained on completion of the sequential processing is not produced so that the sequential processing is continued to the next control processing period. However, the sequential processing on the command signal F which is obtained by the numerical control processing in the control processing period is started in the same control processing period so that the processing is performed faster. In general, it is probable that the sequential processing is completed within the control processing period in which that sequential processing is started in the series of processing, to achieve a high-speed processing as a whole.

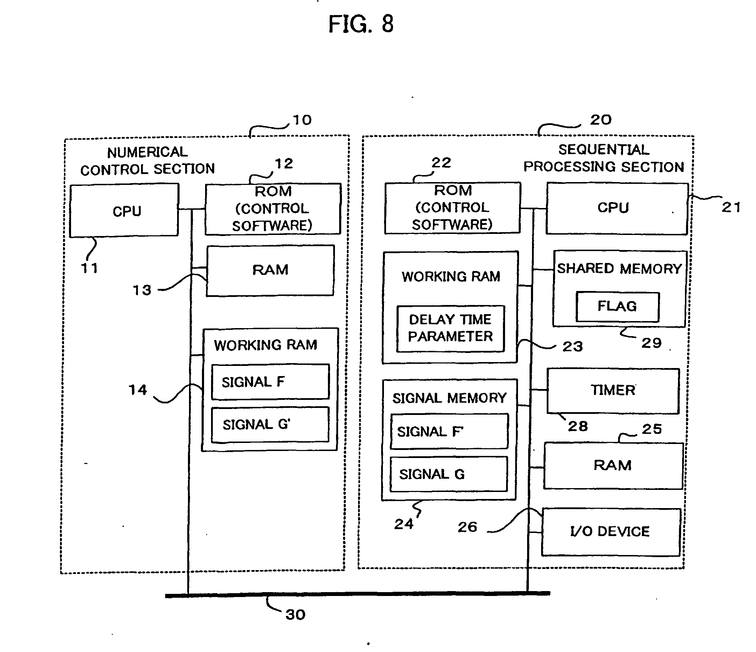

FIG. 8 shows a numerical controller according to a second embodiment of the present invention. The numerical controller shown in FIG. 8 differs from the numerical controller of the first embodiment shown in FIG. 5 in that a shared memory 29 which is accessible by the processor 11 of the numerical control section 10 and the processor 21 of the sequential processing section 20 is provided in the sequential processing section 20 in place of the external interrupt generator 27 in the first embodiment. A flag provided in the shared memory 29 is used in lieu of the interrupt command in the first embodiment. Namely, the external interrupt generator 27 constitutes means for notifying time information on the numerical control processing by the processor 11 for the numerical control processing to the processor 21 for the sequential processing, and the timer 28 and the delay time parameter constitute means for determining the time to start execution of the sequential processing in the first embodiment. In this second embodiment, the flag in the shared memory 29 is used for notifying time information on the numerical control processing by the processor 11 for the numerical control processing to the processor 21 for the sequential processing, and the timer 28 and the delay time parameter constitutes means for determining time to start execution of the sequential processing.

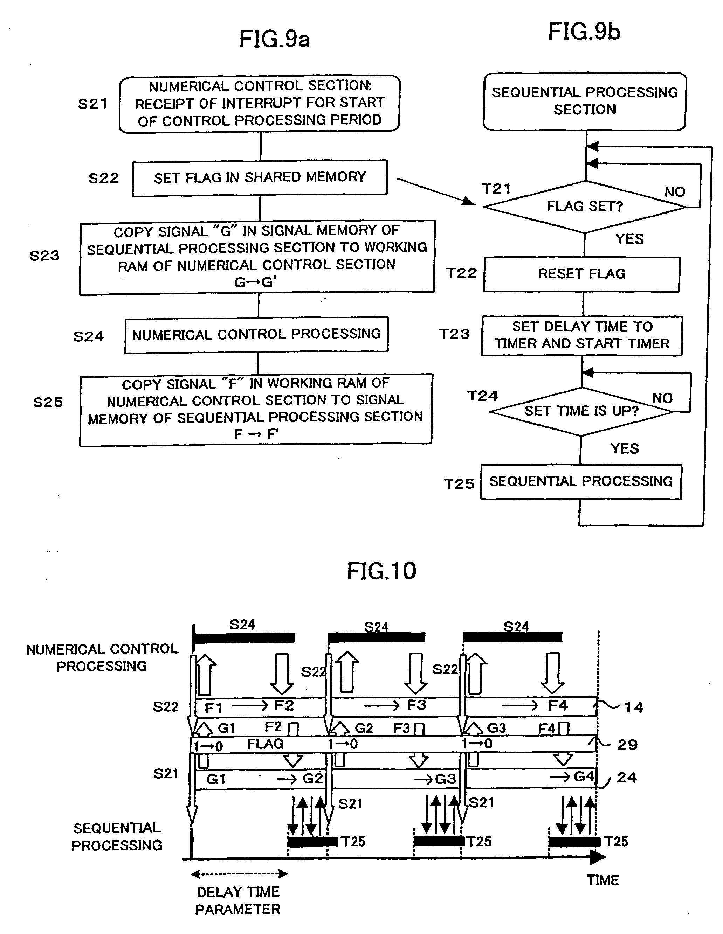

FIGS. 9a and 9b are flowcharts of processing to be performed by the numerical controller according to the second embodiment, and FIG. 10 is a timing chart of the operation of the numerical controller.

The processor 11 of the numerical control section 10 starts the numerical control processing upon receipt of an interrupt for start of the control processing period (Step S21). First, the processor 11 sets the flag in the shared memory 29 (Step S22) and performs the same processing as that in the first embodiment. In particular, a copy G' of the command signal G stored in the signal memory 24 is transferred and stored in the working RAM 14 of the numerical control section 10 (Step S23). The numerical control processing is performed based on the machining program using the signals F and G' stored in the working RAM 14 (Step S24), and a copy F' of a resultant new command signal F is transferred to the sequential processing section 20 and stored in the signal memory 14 (Step S25), to complete the processing in the present processing period. The above processing is repeatedly performed at every control processing period by the processor 11 of the numerical control section 10.

The processor 21 of the sequential processing section 20 monitors the flag in the shared memory 29 (Step T21) and when it is determined that the flag is set, the processor 21 resets the flag (Step T 22) and performs the same processing as the processing of Steps T12-T14 in the first embodiment. In particular, the time period set as the delay time parameter is set to the timer 28 and counting of the set time period by the timer 28 is started (Step T23). The procedure awaits until the timer 28 count up the set time period (Step T24) and when the set time period is counted up, the sequential processing as described in the first embodiment is performed (Step T25). The above processing is repeatedly performed at every control processing period.

In this second embodiment, the sequential processing regarding the command signal from the numerical control section 10 is performed to obtain a resultant signal within one control processing period, and the numerical control processing using the new command signal from the sequential processing section is started in the next control processing period, to make the processing speed faster.

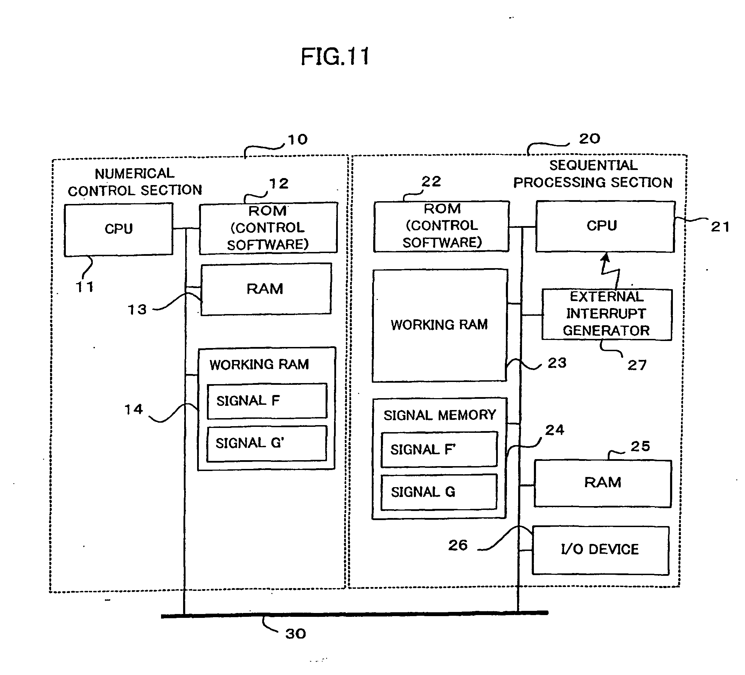

FIG. 11 is a block diagram of a numerical controller according to a different proposal. The numerical controller shown in FIG. 11 differs from the numerical controller of the first embodiment of the invention shown in FIG. 5 in that the timer 28 and the delay time parameter in the working RAM 23 in the first embodiment are not provided. In this proposal, the external interrupt generator 27 constitutes means for determining timing of start of execution of the sequential processing.

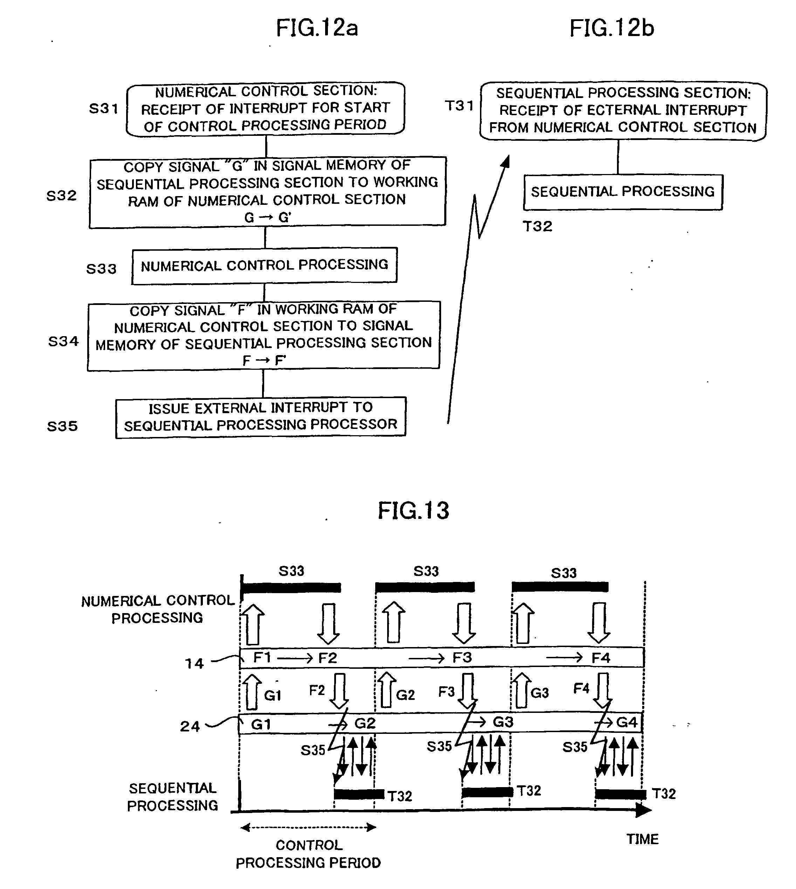

Operations for processing by the processor 11 of the numerical control section 10 and the processor 21 of the sequential processing section 20 of the numerical controller of FIG. 11 are shown in FIG. 12a and 12b, respectively, and a timing chart of the operations in the numerical controller is shown in FIG. 10.

The processor 11 of the numerical control section 10 performs the same processing as the processing of Steps S13-S15 in the first embodiment upon receipt of an interrupt of start of the control processing period (Step S31). In particular, the command signal G stored in the signal memory 24 of the sequential control section 20 is copied to the working RAM 14 of the numerical control section 10 as the command G' (Step S32), and the numerical control processing is performed based on the machining program stored in the RAM 13 using the signals F an G' stored in the working RAM 14 (Step S33). The command signal F obtained by the numerical control processing is copied to the signal memory 14 of the sequential processing section 20 as the signal F' (Step S34).

In this proposal, an external interrupt signal is outputted to the sequential processing section 20 and the processing of the present control processing period is completed (Step S35). The processing of Steps S31-S35 is repeatedly performed at every control processing period.

In the sequential processing section 20, the sequential processing processor 21 performs the sequential processing based on the signals G and F' and input signals from the external input/output device stored in the signal memory 24, as in the same manner as Step T14 of the first embodiment (Step T32). The above processing of Steps T31 and T32 is repeatedly executed.

In this proposal also, the sequential processing is started after the command signal F for the sequential processing section 20 is copied in the signal memory 24 of the sequential processing section 20 as a result of the numerical control processing by the numerical control section 10 in the same control processing section, and is probably completed within the control processing period to obtain a result of the sequential processing using the command signal from the numerical control section 10 within the control processing period, so that the numerical control is performed based on the new command signal from the sequential control section in the next control processing period, to achieve high speed processing.

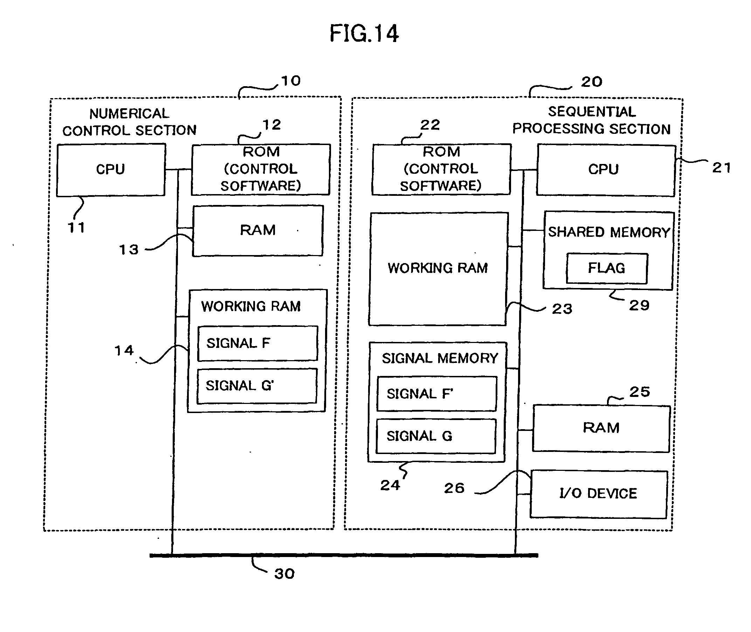

FIG. 14 is a block diagram of a numerical controller according to another proposal. The numerical controller shown in FIG. 14 differs from the numerical controller of the above proposal shown in FIG. 11 in that a shared memory 29 is provided in place of the external interrupt generator 27 and a flag which is accessible by the processor 11 of the numerical control section 10 and the processor 21 of the sequential processing section 20 is provided in the shared memory 29. The flag in the shared memory 29 constitutes means for determining timing of start of execution of the sequential processing.

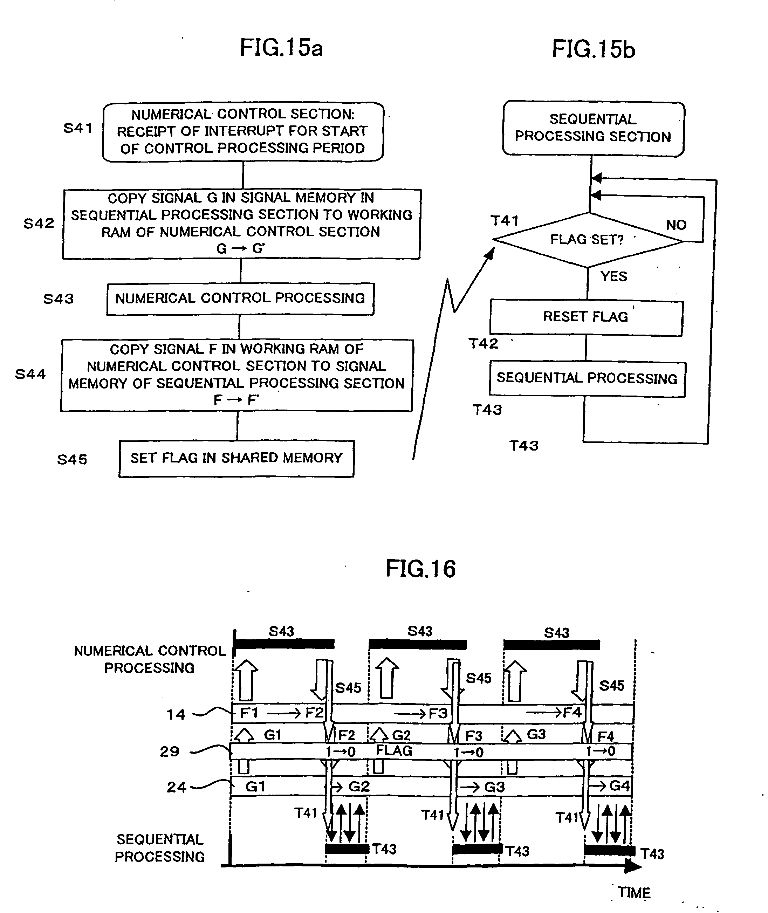

Processing to be performed by the processor 11 of the numerical control section 10 and processing to be performed by the processor 21 of the sequential processing section 20 of the numerical controller of FIG. 14 are shown in FIGS. 15a and 15b, respectively.

The processing of Steps S41-S44 is the same as the processing of Steps S31-S34 in the previous proposal as shown in FIG. 12. According to this proposal, the processing of setting the flag in the shared memory 29 at Step S45 is substituted for the processing of generating an external interrupt signal at Step 35 in the previous proposal.

The processor 21 of the sequential processing section 20 monitors the flag in the shared memory 29 (Step T41) and when it is determined that the flag is set, the processor 21 resets the flag (Step T42) and performs the sequential processing in the same way as described previously. The processors 11 and 21 perform the above processing at every control processing period.

FIG. 16 is a timing chart of operations of the numerical controller of FIG. 14. As can be seen from FIG. 16, since the sequential processing using the command F obtained by the numerical control processing in the control processing period is started by the processor 21 of the sequential processing section 20 in the same control processing period and probably completed within the same control processing period, the resultant command signal G is copied to the working RAM 14 of the numerical control section 10 in the next control processing period to be executed by the numerical control section 10, to complete the numerical control processing and the sequential control processing within the same control processing period, to achieve high speed processing of the numerical controller.

According to the present invention, as described with reference to the embodiments of FIGS. 1 to 10, the sequential processing is started based on a command signal from the numerical control section earlier than the conventional numerical controller to make the processing speed faster. It is highly probable that the sequential processing is completed within a control processing period of the numerical control processing, so that the processing speed of the numerical controller is made faster in comparison with the conventional numerical controller.

## Claims

1. A controller for controlling a machine by executing numerical control processing by a first processor (10) and sequential processing by a second processor (20), **characterised by** comprising:
notifying means (27,29) for notifying a starting time of the numerical control processing by said first processor (10) to said second processor (20), and
determining means (23,28) for determining time to start the sequential processing by said second processor (20) based on the starting time notified by said notifying means (27,29), wherein said determining means (23,28) includes a delay-time parameter for designating a delay time and determines the time to start execution of the sequential processing by calculation on the basis of the starting time of the numerical control processing using the delay time designated by the delay-time parameter.

2. A controller for controlling a machine according to claim 1, wherein said first processor (10) executes the numerical control processing at every control processing period, and said determining means (23,28) determines the time to start the sequential processing within the same control processing period in which the execution of the numerical control processing is completed.

3. A controller for controlling a machine according to claim 1 or 2, wherein said notifying means (27) includes interrupt generating means (27) for generating an external interrupt from said first processor (10) to said second processor (20) so as to notify the starting time of the numerical control processing to said second processor (20).

4. A controller for controlling a machine according to claim 1 or 2, wherein said notifying means (29) includes a shared memory (29) accessible by both of said first processor (10) and said second processor (20), and the starting time of the numerical control processing is notified by setting a flag in said shared memory (29) by said first processor (10) and monitoring of the flag in said shared memory by said second processor (20).

## Patentansprüche

1. Controller zum Steuern einer Maschine, wobei ein erster Prozessor (10) eine numerische Steuerungsverarbeitung ausführt und ein zweiter Prozessor (20) eine nachfolgende Verarbeitung, umfassend:
eine Meldevorrichtung (27, 29), die eine Anfangszeit, zu der der erste Prozessor (10) mit der numerischen Steuerungsverarbeitung beginnt, an den zweiten Prozessor (20) meldet, und
eine Festlegungsvorrichtung (23, 28), die einen Zeitpunkt festlegt, zu dem der zweite Prozessor (20) mit der nachfolgenden Verarbeitung beginnt, und zwar abhängig von der Anfangszeit, die die Meldevorrichtung (27, 29) gemeldet hat, wobei die Festlegungsvorrichtung (23, 28) einen Zeitverzögerungsparameter enthält, der eine Verzögerungszeit festlegt, und den Zeitpunkt für den Beginn der Ausführung der nachfolgenden Verarbeitung durch eine Berechnung anhand der Anfangszeit der numerischen Steuerungsverarbeitung festlegt und dabei die Verzögerungszeit verwendet, die der Zeitverzögerungsparameter angibt.

2. Controller zum Steuern einer Maschine nach Anspruch 1, wobei der erste Prozessor (10) die numerische Steuerungsverarbeitung in jeder Steuerungsverarbeitungsperiode ausführt, und die Festlegungsvorrichtung (23, 28) die Anfangszeit der nachfolgenden Verarbeitung innerhalb der gleichen Steuerungsverarbeitungsperiode festlegt, in der die Ausführung der numerischen Steuerungsverarbeitung abgeschlossen wird.

3. Controller zum Steuern einer Maschine nach Anspruch 1 oder 2, worin die Meldevonichtung (27) eine Interrupterzeugungsvorrichtung (27) umfasst, die einen extemen Interrupt vom ersten Prozessor (10) für den zweiten Prozessor (20) erzeugt, damit dem zweiten Prozessor (20) die Anfangszeit der numerischen Steuerungsverarbeitung gemeldet wird.

4. Controller zum Steuern einer Maschine nach Anspruch 1 oder 2, worin die Meldevorrichtung (29) einen gemeinsamen Speicher (29) enthält, auf den sowohl der erste Prozessor (10) als auch der zweite Prozessor (20) zugreifen können, und die Anfangszeit der numerischen Steuerungsverarbeitung dadurch gemeldet wird, dass der erste Prozessor (10) ein Flag im gemeinsamen Speicher (29) setzt und der zweite Prozessor (20) das Flag im gemeinsamen Speicher überwacht.

## Revendications

1. Un dispositif de commande pour commander une machine par l'exécution d'un traitement de commande numérique par un premier processeur (10) et d'un traitement séquentiel par un second processeur (20), **caractérisé par le fait qu'**il comprend :
des moyens de notification (27, 29) pour notifier audit second processeur (20) un temps de démarrage du traitement de commande numérique par ledit premier processeur (10), et
des moyens de détermination (23, 28) pour déterminer un temps pour démarrer le traitement séquentiel par ledit second processeur (20) sur la base du temps de démarrage notifié par lesdits premiers moyens de notification (27, 29), lesdits moyens de détermination (23, 28) comprenant un paramètre de temps de retard pour désigner un temps de retard et déterminant le temps pour démarrer l'exécution du traitement séquentiel par calcul sur la base du temps de démarrage du traitement de commande numérique en utilisant le temps de retard désigné par le paramètre de temps de retard.

2. Un dispositif de commande pour commander une machine selon la revendication 1, dans lequel ledit premier processeur (10) exécute le traitement de commande numérique à chaque période de traitement de commande, lesdits moyens de détermination (23, 28) déterminant le temps pour démarrer le traitement séquentiel à l'intérieur de la même période de traitement de commande dans laquelle l'exécution du traitement de commande numérique est achevée.

3. Un dispositif de commande pour commander une machine selon la revendication 1 ou 2, dans lequel lesdits moyens de notification (27) comprennent des moyens de formation d'interruption (27) pour produire une interruption externe depuis ledit premier processeur (10) jusqu'audit second processeur (20) de manière à notifier audit second processeur (20) le temps de démarrage du traitement de commande numérique.

4. Un dispositif de commande pour commander une machine selon la revendication 1 ou 2, dans lequel lesdits moyens de notification (29) comprennent une mémoire partagée (29) accessible à la fois par ledit premier processeur (10) et ledit second processeur (20), le temps de démarrage du traitement de commande numérique étant notifié en positionnant un indicateur prévu dans ladite mémoire partagée (29) par ledit premier processeur (10), et en contrôlant l'indicateur prévu dans ladite mémoire partagée par ledit second processeur (20).
